Europäisches Patentamt

European Patent Office

Office européen des brevets

(19)

(11) EP 0 924 911 B1

(12) EUROPÄISCHE PATENTSCHRIFT

(45) Veröffentlichungstag und Bekanntmachung des Hinweises auf die Patenterteilung:
04.04.2001 Patentblatt 2001/14

(51) Int Cl.⁷: **H04L 27/30**, H04B 3/54

(21) Anmeldenummer: 97122042.1

(22) Anmeldetag: 15.12.1997

(54) **Mehrträgerverfahren zur Übertragung über Energieverteilnetze**

Multicarrier method of transmission on power distribution networks

Procédé multiporteur de transmission sur des réseaux de distribution d'énergie

(84) Benannte Vertragsstaaten:
**AT BE CH DE DK ES FI FR GB GR IT LI LU NL PT SE**

(43) Veröffentlichungstag der Anmeldung:
**23.06.1999 Patentblatt 1999/25**

(73) Patentinhaber: **ABB PATENT GmbH**
**68309 Mannheim (DE)**

(72) Erfinder:
• **Dostert, Klaus, Prof. Dr.**
**6706 Krickenbach (DE)**
• **Waldeck, Torsten, Dipl.-Ing.**
**76133 Karlsruhe (DE)**

(74) Vertreter: **Rupprecht, Klaus, Dipl.-Ing. et al**
**c/o ABB Patent GmbH,**
**Postfach 10 03 51**
**68128 Mannheim (DE)**

(56) Entgegenhaltungen:
**EP-A- 0 085 753**     **EP-A- 0 691 755**
**WO-A-91/16770**     **WO-A-93/01660**

• **LO PRESTI, PENT: "Waveform transmission with FSK permutation modulation in the presence of interfering signals" ALTA FREQUENZA., April 1972, MILANO, IT, Seiten 240-251, XP000198342**

**Beschreibung**

Die Erfindung betrifft ein Verfahren und eine Einrichtung zur schnellen und zuverlässigen Übermittlung von digitalen Informationen, insbesondere über elektrische Energieverteilnetze, unter Einsatz mehrerer, vorzugsweise orthogonaler Signalformen.

Seit Dezember 1991 ist die europäische Norm EN 50 065, die den Status einer deutschen Norm hat, in Kraft. Diese Norm regelt die Nutzung des Frequenzbereichs von 3kHz...148,5kHz für Signalübertragungszwecke an elektrischen Energieverteilnetzen. Das verfügbare Band wird dabei grob in zwei Bereiche eingeteilt: Der Frequenzbereich von 3kHz...95kHz ist den Energieversorgungsunternehmen (EVU) vorbehalten; dort sind Sendeamplituden bis maximal 134dBµV zulässig. Der restliche Frequenzbereich von 95kHz...148,5kHz steht dem privaten Nutzer genehmigungsfrei zur Verfügung, wobei eine Sendeamplitude von 116dBµV nicht überschritten werden darf. Dieser ziemlich niedrige Sendepegel (weniger als 1V) geht einher mit geringer verfügbarer Bandbreite. Die EN 50 065-1 stellt hohe Anforderungen an Verfahren und Einrichtungen zur störsicheren Übertragung von Informationen über Stromversorgungsleitungen. Wegen der Amplitudenbegrenzung haben Übertragungsverfahren, die stets die volle Amplitude nutzen können, die besten Erfolgsaussichten.

Für die Informationsübertragung über Stromversorgungsnetze werden derzeit Systeme mit schmalbandiger oder auch mit breitbandiger, bandspreizender Modulation eingesetzt, die beispielsweise in den Druckschriften DE-A1-44 23 978, die der EP-A2-0691 755 entspricht, DE-A1-43 23 376, DE-C2-40 01 265, DE-C2-40 01 266, EP-B1-0 200 016 und EP-B1-0 199 148 beschrieben sind. Das technisch wohl einfachste Verfahren, das stets die volle zulässige Amplitude nutzen kann, ist FSK (Frequency Shift Keying). Die einfache Realisierbarkeit von FSK ist sicher ein entscheidender Grund dafür, da die Mehrzahl der momentan am Markt erhältlichen Systeme zur Informationsübertragung über Stromnetze mit FSK arbeitet. Im praktischen Einsatz im Rahmen zahlreicher Feldversuche sind die Nachteile der FSK schrittweise zutage getreten, und nach heutiger Einschätzung muß festgestellt werden, daß eine hinreichende Zuverlässigkeit für Dienste aller Art, die die EVUs künftig über ihre Netze anbieten wollen, mit FSK nicht zu erreichen sein wird. Das essentielle Problem der FSK ist, daß bereits bei Störung einer einzigen Trägerfrequenz, sei es durch eine selektive Dämpfung, die der zeitvariante Übertragungskanal zu jeder Zeit an irgendeiner Stelle aufweisen kann, oder sei es durch einen schmalbandiger Störer in Form eines Fernsehgerätes oder eines Schaltnetzteils, völliges Versagen der Übertragung eintritt. Bandspreizende Verfahren wie z.B. Frequency Hopping (FH), die vielfältige Frequenzvariationen erlauben, können hier Abhilfe schaffen - siehe z.B. die Druckschrift DE-A1-44 23 978. Der Aufwand ist im Vergleich zu einem FSK-System zwar höher, aber durch die Fortschritte der modernen Mikroelektronik durchaus tragbar. Dennoch kam die praktische Umsetzung gängiger FH-Verfahren bislang über ein Versuchsstadium nicht hinaus; vor allem sind am Markt bislang keine einsatzfähigen Systeme erhältlich. Obwohl die FH-Technik grundsätzlich in der Lage ist, alle in der Praxis beobachteten Probleme der FSK zu überwinden, finden sich im Verfahren und in der technischen Realisierung noch entscheidende Nachteile, die wohl letztlich den bislang nur zögerlichen Einsatz von Systemen mit flexibler Verwendung mehrerer, zeitlich nacheinander gesendeter Trägerfrequenzen begründen.

Der wesentliche Nachteil beim Übergang von FSK- zu FH-Verfahren ist die bei gleicher Nettodatenrate nötige Erhöhung der Chiprate (vgl. Druckschrift DE-A1-44 23 978). Bei einer Chiprate von 1200 s$^{-1}$ erreicht ein FSK-System so z.B. eine Datenrate von 1200bit/s, während ein FH-System mit 4 Trägern pro Bit z.B. nur noch 300bit/s bieten kann. Um bei FH die gleiche Nettodatenrate zu erzielen, wäre somit eine Chiprate von 4800s$^{-1}$ erforderlich. Dies führt in jedem Fall zu erhöhtem Aufwand bei der Signalerzeugung und -verarbeitung, aber insbesondere bei der Empfängersynchronisation, die jetzt um den Faktor vier präziser werden müßte.

Im Aufsatz LO PRESTI, PENT: "Waveform transmission with FSK permutation modulation in the presence of interfering signals" ALTA FREQUENZA., April 1972, Milano, IT, Seiten 240 bis 251, XPOOO198342 ist im Zusammenhang mit einer AD-Wandlung ein FSK-Verfahren beschrieben, bei dem Quantifizierungsstufen L jeweils durch ein "Code-word" repräsentiert werden, wobei jeweils zwei Frequenzen aus einer benutzten Gesamtzahl N gleichzeitig gesendet werden.

Der Erfindung liegt die Aufgabe zugrunde, ein Mehrträgerverfahren anzugeben, mit dem sich die aufgeführten Nachteile des aus DE-A1-44 23 978 bzw. EP-A2-0691 755 bekannten Verfahrens wesentlich reduzieren und sich eine schnelle und störresistente Übertragung erreichen läßt. Außerdem soll eine Einrichtung zur Durchführung des Verfahrens angegeben werden.

Diese Aufgabe wird durch ein symbolverarbeitendes Mehrträgerverfahren mit den im Anspruch 1 angegebenen Merkmalen gelöst. Vorteilhafte Ausgestaltungen und eine Einrichtung zur Durchführung des Verfahrens sind in weiteren Ansprüchen angegeben.

Im Anspruch 1 ist ein Mehrträgerverfahren zur Digitaldatenübertragung über elektrische Energieverteilnetze, bei dem zur Synchronisation der Signalsynthese für Senden und Empfangen und für die Synchronisation der Empfangssignalverarbeitung die Netzwechselspannung als globales Referenzsignal verwendet wird, wobei der Beginn einer Datenübertragung immer an einen Nulldurchgang der Netzspannung gekoppelt wird, und wobei zur Informationsübertragung mittels schneller phasenkontinuierlicher Frequenzänderungen und mittels Symbolverarbeitung

a) aus einem zu sendenden Datenstrom Kombinationen von ld(N) Datenbits einer Anzahl N von Symbolen zugeordnet werden, von denen jedes Symbol sich aus derselben Anzahl N Signalformen unterschiedlicher Frequenzen zusammensetzt, und wobei die Zahl eine Zweierpotenz, vorzugsweise N=4 ist,

b) empfangsseitig eine Anzahl 2N parallel arbeitender digitaler signalangepaßter Filter für den gleichzeitigen inkohärenten Optimalempfang aller N jeweils für die Darstellung eines Symbols eingesetzten Signalformen verwendet wird, wobei für jede der N Signalformen ein der jeweiligen Signalformenergie entsprechender digitaler Zahlenwert als Korrelationswert gebildet wird,

c) eine Bewertung und Skalierung der N Korrelationswerte durch Vergleich mit einer frei wählbaren Schwelle erfolgt, und

d) die N ein Symbol bildenden Korrelationswerte zum jeweiligen Symbolwert aufsummiert werden, daraus das Symbol mit dem größten Wert ermittelt und die ihm unmittelbar zugeordnete Datenbitkombination - als Empfangsdaten ED - ausgegeben wird.

Als eine vorteilhafte Ausgestaltung ist im Anspruch 2 angegeben, daß die zur Bewertung und Skalierung benutzte Schwelle als Prozentsatz des maximal möglichen Autokorrelationswertes einer Signalform gewählt und adaptiv, abhängig von der empfangenen Stör- und/oder Nutzsignalenergie, eingestellt wird.

Eine weitere Beschreibung der Erfindung erfolgt anhand der untenstehenden Erläuterung von Vorteilen der erfindungsgemäßen Lösung, der zugrundeliegenden Überlegungen, und von Ausführungsbeispielen mit Bezugnahme auf Zeichnungsfiguren.

Es zeigen:

Fig. 1 den Gesamtaufbau eines Modems,

Fig. 2 ein Mikrorechnersystem zur Realisierung mehrerer Funktionsblöcke aus Fig. 1, und

Fig. 3 eine Darstellung zur Erläuterung eines bevorzugten Synchronisationsverfahrens, das im Rahmen des erfindungsgemäßen Verfahrens anwendbar ist.

Zu den Vorteilen des symbolverarbeitenden Mehrträgerverfahrens zählt, daß stets mit konstanter Signalamplitude gearbeitet wird und so eine optimale energetische Nutzung der Kanalressourcen unter Beachtung der einschlägigen Normen gegeben ist. Zur Beschreibung der Erfindung wird im folgenden eine Einrichtung, die als Modem (Kurzwort für Modulator-Demodulator) bezeichnet wird, beispielhaft angeführt. Ein derartiges Modem dient zur bidirektionalen Übermittlung digitaler Informationen über elektrische Energieverteilnetze. Die Datenübertragung ist in jedem Fall resistent gegen Störungen auf den Stromversorgungsleitungen und erlaubt trotz der widrigen Übertragungseigenschaften dieser Leitungen eine zuverlässige schnelle Kommunikation. Des weiteren ist die gleichzeitige Aktivität mehrerer Modems am selben Stromnetz ohne gegenseitige Störbeeinflussung möglich (Vielfachzugriff auf dasselbe Frequenzband).

Zur Durchführung des Verfahrens ist die Herstellung und Verwendung einer anwenderspezifischen integrierten Schaltung mit gemischt analogen und digitalen Funktionen (engl.: Mixed Signal ASIC) vorteilhaft.

So kann auf digitaler Basis die senderseitige Signalerzeugung und die korrelative empfängerseitige Verarbeitung bis hin zur Bitentscheidung mit hoher Präzision exakt reproduzierbar erfolgen. Ohne Hardwareänderungen steht eine praktisch unbegrenzte Vielfalt von Signalformen zur Verfügung, mit der Möglichkeit, verschiedene Datenraten und Frequenzbereiche in weiten Grenzen frei zu wählen. Diese, im ASIC untergebrachten Digitalfunktionen, sind auf anderem Wege, selbst durch Verwendung der aufwendigsten digitalen programmierbaren Signalprozessoren, nach dem derzeitigen Stand der Technik nicht realisierbar. Darüber hinaus enthält das ASIC analoge Funktionen zur Empfangssignalverstärkung und -filterung sowie zur Analog-Digitalwandlung und zur senderseitigen Digital-Analogwandlung, also Funktionseinheiten, die ein Standard-Signalprozessor grundsätzlich nicht beinhaltet. Die Einstellung der Empfangssignalverstärkung erfolgt dabei automatisch so, daß der Analog-Digitalwandler stets in einem günstigen Arbeitsbereich betrieben wird.

Der Erfindung liegen die nachstehenden Überlegungen zugrunde:

Wenn in einem FH-System N Trägerfrequenzen zum Einsatz kommen, lassen sich damit N! (N-Fakultät = N(N-1)(N-2)....1) verschiedene Kombinationen, die im folgenden als Symbole bezeichnet werden, bilden. Mit N=3 Frequenzen lassen sich so 6 Symbole darstellen; bei N=5 hat man schon 120. Die 6 Symbole bei N=3 wären in der Lage, $ld(6) = 2bit$ zu übertragen, während man bei N=5 bereits $ld(120) = 6bit$ erzielen könnte. Diese Möglichkeiten werden aber bei "normalem" FH nicht ausgenutzt, sondern es werden nur zwei Symbole (Kombinationen) ausgewertet, was dem Informationsgehalt 1bit entspricht - siehe z.B. die Druckschrift DE-A1-44 23 978. In der normalen FH-Technik wird auf diese Weise Redundanz bereitgestellt, die eine Übertragung z.B. robust gegen den Ausfall einzelner Frequenzbereiche macht. Der Nachteil, der sich dabei ergibt, ist offensichtlich: Die Übertragungsgeschwindigkeit sinkt entsprechend der Anzahl der eingesetzten Trägerfrequenzen. Die Grundidee, die zu der vorliegenden Erfindung geführt hat, vermeidet diesen Geschwindigkeitsnachteil und gewährleistet gleichzeitig uneingeschränkt die Erhaltung der Störresistenz, die dem FH-Prinzip innewohnt. Um diesen wesentlichen Gesichtspunkt der Erfindung näher zu erläutern, werden einige Beispiele gegenübergestellt:

Werden für N=3 die drei benutzten Frequenzen mit $f_1$, $f_2$ und $f_3$ bezeichnet, dann ergeben sich folgende 6 Symbole $S_1...S_6$, die unterschiedlich genutzt werden können:

Tabelle 1:

| FH-Technik und Symbolverarbeitung für N=3 Trägerfrequenzen | | | |
|---|---|---|---|
| Symbol-Nr. | Frequenzfolge | FH-Technik | Symbolverarbeitung |
| $S_1$ | $f_1 f_2 f_3$ | 0 | 00 |
| $S_2$ | $f_1 f_3 f_2$ | - | 01 |
| $S_3$ | $f_2 f_1 f_3$ | - | 10 |
| $S_4$ | $f_2 f_3 f_1$ | - | 11 |
| $S_5$ | $f_3 f_1 f_2$ | 1 | - |
| $S_6$ | $f_3 f_2 f_1$ | - | - |

In der Spalte FH-Technik fällt sofort die hohe Anzahl ungenutzter Symbole auf, die letztlich die Robustheit liefert. Die reine Zahl der ungenutzten Symbole ist jedoch keineswegs das alleinige Maß für die erzielbare Störresistenz, sondern maßgebend ist die Zahl der Chips mit unterschiedlicher Frequenz bei den zur Informationsdarstellung benutzen Symbolen. Man erkennt, daß sich in der Spalte FH-Technik die mit 0 bzw. 1 markierten Symbole $S_1$ und $S_5$ in allen drei Chips unterscheiden und somit im Empfänger sehr gut separiert werden können. Bei Betrachtung der Spalte "Symbolverarbeitung" sieht man, daß sich nur die mit 00 und 11 markierten Symbole $S_1$ und $S_4$ sowie 01 und 10, entsprechend $S_2$ und $S_3$, in allen drei Chips unterscheiden, während die Kombinationen 00 und 01 oder 00 und 10 nur noch in zwei Chips verschieden sind. Unter dieser Tatsache leidet die Störresistenz. Würde man alle 6 Symbole zur Infomationsübertragung heranziehen, hätte man nur noch jeweils 1 unterschiedliches Chip als Entscheidungskriterium; damit wäre die Übertragung nicht mehr zuverlässiger als bei FSK, denn der Ausfall einer einzigen Frequenz würde zum Versagen führen. Aus der obigen Tabelle erkennt man, daß die Verwendung von drei Trägerfrequenzen offenbar nicht zu einer günstigen Lösung führt. Betrachtet man dagegen eine Folge von vier Frequenzen, die 24 Symbole erlaubt, von denen man jedoch nur genau die Vier zur Informationsübertragung nutzt, die sich in allen vier Chips unterscheiden - siehe Tabelle 2,

Tabelle 2:

| Optimale Symbolverarbeitung bei N=4 | |
|---|---|
| Frequenzfolge | Datensymbole |
| $f_1 f_2 f_3 f_4$ | 00 |
| $f_2 f_3 f_4 f_1$ | 01 |
| $f_3 f_4 f_1 f_2$ | 10 |
| $f_4 f_1 f_2 f_3$ | 11 |

dann ergibt sich die gleiche Störresistenz, die man bei normaler FH-Technik erhalten würde; aber weil nun jedes der dargestellten Symbole zwei Datenbits repräsentiert, ergibt sich die doppelte Übertragungsgeschwindigkeit. Das dargestellte Prinzip ist nicht nur für N=4 anwendbar, sondern immer dann, wenn von den N! möglichen Symbolen genau N für die Informationsdarstellung benutzt werden. Dabei ist es vorteilhaft, wenn N eine Zweierpotenz ist, weil ld(N) dann eine ganze Bit-Zahl ergibt. Ist ld(N) nicht ganzzahlig, kann immer nur die nächstkleinere Ganzzahl benutzt werden, d.h. die nutzbare Nettodatenrate verringert sich. Nach N=4 wäre somit N=8 wieder günstig, wobei sich unter Nutzung von 8 der 8! möglichen Symbole mit jedem der genutzten Symbole 4bit übertragen ließen. Für den praktischen Einsatz an Energieverteilnetzen wird ein System, das sich auf vier Trägerfrequenzen stützt, mit Sicherheit hinreichende Störresistenz bieten, um die von den EVUs geplanten neuen Dienste mit hoher Zuverlässigkeit zu gewährleisten. Wie aus der Tabelle 2 zu ersehen ist, könnten im Grenzfall bis zu drei der vier Trägerfrequenzen ausfallen, ohne daß dadurch ein Bitfehler auftreten würde. Das ist im Vergleich zu FSK, wo bereits der Ausfall einer einzigen Frequenz zum Versagen führt, ein signifikanter Fortschritt. Bei Verwendung von normalem FH wären N=7 Trägerfrequenzen nötig, wobei die Nettodatenrate auf 1/7 der Chiprate sinken würde. Das erfindungsgemäße Verfahren bietet die gleiche Störresistenz beim Verhältnis 1/2 von Datenrate zu Chiprate.

Die Praxis hat gezeigt, daß bei geschickter Wahl der Trägerfrequenzen, die Wahrscheinlichkeit, daß zwei davon gleichzeitig aufgrund von Dämpfung oder Störung ausfallen, verschwindend gering ist. Der Fall, daß dies gar für drei Träger eintritt, kann praktisch ausgeschlossen werden. Der Ausfall einzelner Träger wird allerdings relativ häufig beobachtet.

Für die praktische Realisierung des erfindungsgemäßen Verfahrens ist die Wahl von N=4 Trägerfrequenzen sicher vorteilhaft. Das im weiteren beschrieben Ausgestaltungsbeispiel geht deshalb von N=4 aus.

Für eine kostengünstige und zuverlässig reproduzierbare Realisierung ist ein weitgehend digitales Konzept, das hochintegrierbar ist, von entscheidender Bedeutung. Des weiteren ist es vorteilhaft, wenn eine Anpassung an verschiedenartige Aufgaben ohne Hardwareänderungen möglich ist, und wenn ein Großteil der analogen Schaltungsteile, die zum Komplettaufbau eines Modems erforderlich sind, monolithisch mitintegriert werden kann. Die im folgenden vorgestellte Ausgestaltung der Erfindung zeigt eine universelle, vorteilhafte Lösung auf.

Ausgangspunkt der Betrachtungen ist eine Übertragung binärer Informationen, die gemäß Tabelle 2 auf Frequenzfolgen (Symbole) abgebildet werden. Während der Dauer $T_s$ eines Symbols wird die Sendefrequenz in diesem Beispiel sprungartig viermal gewechselt. Je größer N gewählt wird, um so störresistenter kann die Informationsübertragung erfolgen, bei allerdings auch steigendem Systemaufwand. Aus bereits weiter oben angeführten Gründen sind N=4 verschiedene und passend ausgewählte Frequenzen für die meisten Anwendungen der vorliegenden Erfindung ausreichend. Passende Wahl bedeutet, daß man die benutzten Frequenzen im verfügbaren Übertragungsband so verteilt, daß eine starke selektive Dämpfung oder ein starker Schmalbandstörer nie zwei oder mehr Frequenzen gleichzeitig beeinträchtigen kann. Um diese Wahl richtig zu treffen, ist ein hinreichender Erfahrungshintergrund erforderlich, den man sich durch umfangreiche Netzuntersuchungen (Netzvermessung), Feldversuche und theoretische Netzmodellierung auf der Basis der Meßergebnisse verschaffen muß.

Auf dem Verteilnetz eines Energieversorgungsunternehmens (EVU) steht für die Informationsübertragung gemäß der europäischen Norm EN 50 065-1 das Frequenzband von 3kHz bis 95kHz, also eine Bandbreite B=92kHz zur Verfügung. Wenn beispielsweise binäre Informationen mit einer Nettodatenrate (Bitrate) $r_D$=1200bit/s mit dem symbolverarbeitenden Mehrträgerverfahren zu übertragen sind, wobei N=4 Trägerfrequenzsprünge während einer Symboldauer $T_s$ erfolgen, dann ist die Frequenzsprungrate h=2400s$^{-1}$. Der Kehrwert T=1/h der Frequenzsprungrate gibt die Dauer des Zeitintervalls an, während dessen jeweils eine der N Frequenzen gesendet wird. Die Nachrichtentheorie besagt, daß in einem Frequenzband der Breite B=92kHz bei der Frequenzsprungrate h=2400s$^{-1}$ maximal eine Anzahl $\lfloor B/h \rfloor = \lfloor 92000/2400 \rfloor =38$ Signalformen mit jeweils um 2400Hz versetzter Frequenz gleichzeitig übertragen werden und ohne gegenseitige Störbeeinflussung von Empfängern, die korrelative Signalverarbeitung durchführen, fehlerfrei detektiert werden können - siehe dazu auch die Druckschrift DE-A1-44 23 978.

Es wäre also möglich, auf einem elektrischen Energieverteilnetz, z.B. zwischen einer Transformatorstation und den angeschlossenen Haushalten bis zu $\lfloor 38/4 \rfloor =9$ Modems mit symbolverarbeitendem Mehrträgerverfahren der beschriebenen Art gleichzeitig und ohne gegenseitige Störbeeinflussung zu betreiben. Entscheidende Voraussetzung dafür ist nicht nur eine hochpräzise Signalerzeugung, sondern auch das genaue Einfügen aller Sendesignale in ein globales Zeitraster und eine perfekte korrelative Signalverarbeitung im Empfängerteil eines jeden Modems.

Eine genaue Sendesignalerzeugung ist nicht nur bei dichter Kanalbelegung erforderlich, sondern auch bei einer einzelnen Punkt-zu-Punkt-Verbindung von Vorteil. Ferner ist wichtig, daß alle Signale von einer festen, hochkonstanten Basisfrequenz abgeleitet werden, und daß beim Frequenzwechsel kein Phasensprung auftritt, sondern ein kontinuierlicher Phasenübergang stattfindet. Die Frequenz hingegen muß sprungartig, d.h. ohne Einschwingvorgang wechseln. Der kontinuierliche Phasenübergang ist in jedem Fall erforderlich, um die strengen Grenzwerte für die Außerbandstörung nach der Norm EN 50 065-1 mit vertretbarem Filteraufwand erfüllen zu können.

Bei der Signalerzeugung und Signalverarbeitung in einem symbolverarbeitenden Mehrträgersystem ist, wie bei praktisch allen Übertragungssystemen hoher Qualität, grundsätzlich eine Synchronisation erforderlich. Insbesondere beim korrelativen Empfang ist die Synchronisation des Empfangssignals mit einem lokal im Empfänger vorhandenen Referenzsignal nötig. Im Fall des symbolverarbeitenden Mehrträgerverfahrens kommt dieses Referenzsignal aus einem Frequenzsynthesizer. Beim Senden wird ebenfalls ein synchronisierter Frequenzsynthesizer benötigt, dessen informationstragende Ausgangssignale ins Stromnetz eingespeist werden. Das Problem der Synchronisation läßt sich bei Systemen, die an Stromversorgungsleitungen arbeiten, mit Hilfe der Netzwechselspannung einfach und kostengünstig lösen - siehe z.B. EP-B1-200 016, EP-B1-0 199 148 und EP-B1-0507 087. In einem weiter unten stehenden Teil dieser Beschreibung wird eine von der Netzspannung unabhängige korrelative Synchronisation vorgestellt, die sich vorteilhaft unmittelbar aus dem erfindungsgemäßen symbolverarbeitenden Mehrträgerverfahren ergibt.

Die Hardware bekannter Sende- und Empfangsgeräte zur Informationsübertragung auf elektrischen Verteilnetzen erlaubt den Einsatz eines symbolverarbeitenden Mehrträgerverfahrens nicht. Nach Beschreibung des Verfahrens wird deshalb im Rahmen der vorliegenden Erfindung eine Einrichtung angegeben, die alle wesentlichen Teile zur Sendesignalsynthese und zur korrelativen Empfangssignalverarbeitung für ein symbolverarbeitendes Mehrträgerverfahren einschließt. Die neue Einrichtung beinhaltet analoge und digitale Schaltungsteile und ist bis auf wenige Komponenten monolithisch integrierbar, wobei Standard-CMOS-Technologie genügt. Hinsichtlich der Frequenzwahl (Lage der benutzen Frequenzen im erlaubten Übertragungsband) wird ein Höchstmaß an Flexibilität erzielt.

Aufgabe einer Sendeeinrichtung in einem Modem mit symbolverarbeitendem Mehrträgerverfahren zur Übertragung digitaler Informationen über Stromversorgungsleitungen ist die präzise und zeitgenaue Erzeugung einer Vielzahl von Signalen mit relativ eng benachbarten Frequenzen. Dabei muß, abhängig von den zu sendenden Informationen, ein rascher phasenkontinuierlicher Frequenzwechsel möglich sein, ohne daß dabei Einschwingvorgänge auftreten. In analoger Technik aufgebaute Einrichtungen können die genannten Anforderungen nicht bewerkstelligen und sind zudem unflexibel, wenn es um Frequenzänderungen geht.

Die Empfangseinrichtung eines Modems muß in der Lage sein, Signale mit benachbarten Frequenzen unbekannter Phasenlage perfekt zu trennen. Dazu ist in mehreren parallel arbeitenden Zweigen des Empfängers signalangepaßte Filterung auf korrelativem Wege notwendig. Das Prinzip der Korrelation ist aus Standard-Lehrbüchern hinreichend bekannt. Aus einem aktiven Korrelator, der allgemein aus einer Multiplizier- und einer Integriereinheit besteht, wird ein signalangepaßtes Filter (engl.: Matched Filter), z.B. für Signalformen der Chipdauer $T_C$, wenn man durch Synchronisation dafür sorgt, daß die Integriereinheit an jedem Chipintervallende auf Null gesetzt wird, nachdem der während der Chipdauer aufintegrierte Wert zur Weiterverarbeitung abgetastet und gegebenenfalls gespeichert wurde. Der Aufwand für eine derartige Schaltung in Analogtechnik wäre untragbar hoch, denn für jede Trägerfrequenz ist ein eigener phasenunempfindlicher Quadraturempfänger erforderlich - vgl. auch die Druckschrift DE-A1-44 23 978. Die Fertigung eines Empfängers auf Basis eines symbolverarbeitenden Mehrträgerverfahrens mit N=4 Frequenzen erfordert also 8 separate Korrelatoren. Derartige Strukturen sind bislang nicht realisiert worden und deshalb sind am Markt auch keine Hardwarekomponenten zur Realisierung hochgradig störresistenter Mehrträgerverfahren erhältlich, obwohl es an Anwendungsgebieten nicht mangelt.

Die Erfindung ermöglicht erstmals eine Hardwarebasis für die einfache und reproduzierbare Herstellung von Modems für symbolverarbeitende Mehrträgerverfahren, wobei mit wachsenden Produktionsstückzahlen stetig sinkende Kosten in industrieller Serienherstellung erzielbar sind. Die Erfindung ist somit geeignet, dem breiten Einsatz störresistenter Datenübertragung auf Stromnetzen besonders in Europa, wo die strengen Einschränkungen der EN 50 065-1 gelten, zum Durchbruch zu verhelfen. Bislang sind auf dem europäischen Markt keine zuverlässig funktionierenden Modems, weder mit konventionellen Modulationsverfahren, noch mit Mehrträgertechnik für die Datenübertragung auf elektrischen Verteilnetzen erhältlich.

Anhand der Zeichnungsfiguren 1 und 2 wird nun eine Ausführungsform der Erfindung beschrieben. Aus Gründen der Übersicht und Anschaulichkeit wird die Übertragung binärer Informationen (also ein Strom zufällig aufeinanderfolgender "H"- und "L"-Bits) mit fester Datenrate $r_D=1/T_B=1200$bit/s unter Einsatz von 4 orthogonalen Signalformen verschiedener Frequenz mit der Chipdauer $T_C=T_B/2$ betrachtet. Man hat also ein symbolverarbeitendes Mehrträgersystem mit N=4 vor sich. Der Übergang zu anderen technisch sinnvollen Werten von N ist anhand der Ausführungen für den Fachmann nachvollziehbar.

An elektrischen Verteilnetzen ist inkohärenter Empfang die Regel; deshalb sind für N=4 acht parallel arbeitende Korrelatoren im Empfänger nötig. Mit $T_C=T_B/2$ ergibt sich eine Chiprate h=2400s$^{-1}$. Im Frequenzbereich 9,6kHz... 148,8kHz lassen sich z.B. 60 Frequenzen finden, die mit jeweils 2400Hz Abstand einen orthogonalen Frequenzsatz bilden, wobei in jede Chipdauer $T_C$ jeweils eine ganze Anzahl von Perioden paßt. Bei 600kHz Abtastrate werden für eine fehlerfreie Darstellung maximal 125 Abtastwerte benötigt. Wegen des inkohärenten Empfangs werden pro Abtastwert des Empfangssignals 8 Referenzwerte benötigt, so daß für die Ausgabe der Referenzsignalabtastwerte die Taktfrequenz $f_m=4,8$MHz erforderlich ist.

Bei symbolverarbeitenden Mehrträgerverfahren kann ein Optimum bezüglich Störresistenz und gleichzeitig auch Manipulationssicherheit dann erreicht werden, wenn die Frequenzen, auf die die Nutzinformation verteilt wird, möglichst weit auseinander liegen. Es ist dann unwahrscheinlich, daß mehrere Frequenzen gleichzeitig derselben Dämpfung und/oder Störbeeinflussung unterliegen. Für ein System mit N=4 ist z.B. die folgende Wahl der Frequenzen sinnvoll:

Tabelle 3:

| Beispiel einer Frequenzfestlegung für N=4 | | | |
|---|---|---|---|
| $f_1$ | $f_2$ | $f_3$ | $f_4$ |
| 52.800Hz | 62.400Hz | 72.000Hz | 86.400Hz |

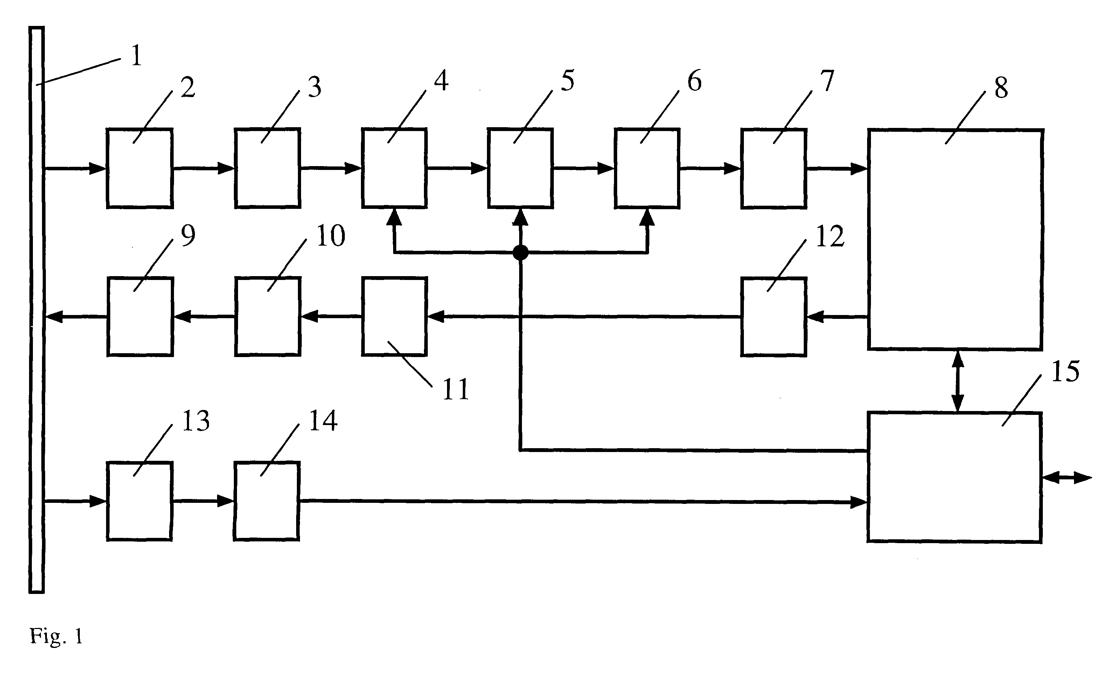

Fig. 1 zeigt den Gesamtaufbau eines Modems, dessen Funktion nachstehend - beginnend mit dem Empfangszweig - im einzelnen erläutert wird. Vom Stromnetz **1** gelangt das Empfangssignal über einen Koppler **2** auf ein Bandpaßfilter **3**, das im Bereich der vier gewünschten Frequenzen $f_1...f_4$ durchlässig ist, im übrigen Frequenzbereich jedoch möglichst gut sperrt. Die Abtrennung der Netzspannung und weiterer tiefer Frequenzen wird bereits großenteils vom Koppler, der als Hochpaß wirkt, übernommen. Es folgt eine Einrichtung zur automatischen Verstärkungsregelung, bestehend aus drei Operationsverstärkerstufen **4, 5** und **6,** deren Verstärkung digital über ein integriertes Mikrocontrollersystem **15** eingestellt werden kann. Das verstärkte Empfangssignal gelangt an einen Analog-Digitalwandler **7,** der die digitalisierten Abtastwerte an das Symbolverarbeitungssystem **8** liefert, dessen Ergebnisse von dem integrierten Mikrocontrollersystem **15** übernommen und weiterverarbeitet werden. Das Mikrocontrollersystem **15** liefert schließlich zum einen die gesendeten und hier empfangenen Daten über eine serielle Schnittstelle und berechnet zum anderen die einzustellende Verstärkung für die drei Operationsverstärkerstufen **4, 5** und **6**. Eine Besonderheit hierbei ist, daß zwei der drei Verstärker "schnellveränderlich" sind, während der dritte von Symbol zu Symbol höchstens um den Faktor 2 verstellt wird. Aufgabe der schnellveränderlichen Verstärker ist eine schnelle Reaktion auf plötzliche, erhebliche Kanalveränderungen, während der langsam veränderliche Verstärker nur geringe Schwankungen ausgleichen soll. Der Regelalgorithmus, der vorteilhaft in Form von Software im Mikrocontrollersystem **15** implementiert wird, versucht stets, die schnellen Verstärker auf möglichst hohe Werte der Verstärkung einzustellen, damit bei schnellen Kanaländerungen ein großer Reaktionsspielraum zur Verfügung steht. Ein Pegelschätzer, der dem Mikrocontrollersystem **15** die Berechnungsgrundlage für die Verstärkereinstellungen liefert, ist als Mittelwertbildner in digitaler Hardware ausgeführt und Bestandteil des Symbolverarbeitungssystems **8**. Der Pegelschätzer erhält Z digitalisierte Werte x(k) des Empfangssignals und ermittelt damit den Schätzwert

$$X_{sch} = \frac{\pi}{2} \cdot \sum_{k=1}^{Z} |x(k)|,$$

jeweils nach Ablauf einer Symboldauer. Das Verhältnis des Schätzwertes $X_{sch}$ zu einem Sollwert $X_{soll}$ liefert die Grundlage für die Erzeugung der Schaltbefehle für die Verstärkungseinstellung durch das Mikrocontrollersystem **15**. Die maximale Gesamtverstärkung ist variabel von 1... 4096, wobei jede der drei Verstärkerstufen auf die Verstärkungswerte 1, 2, 4, 8 oder 16 einstellbar ist.

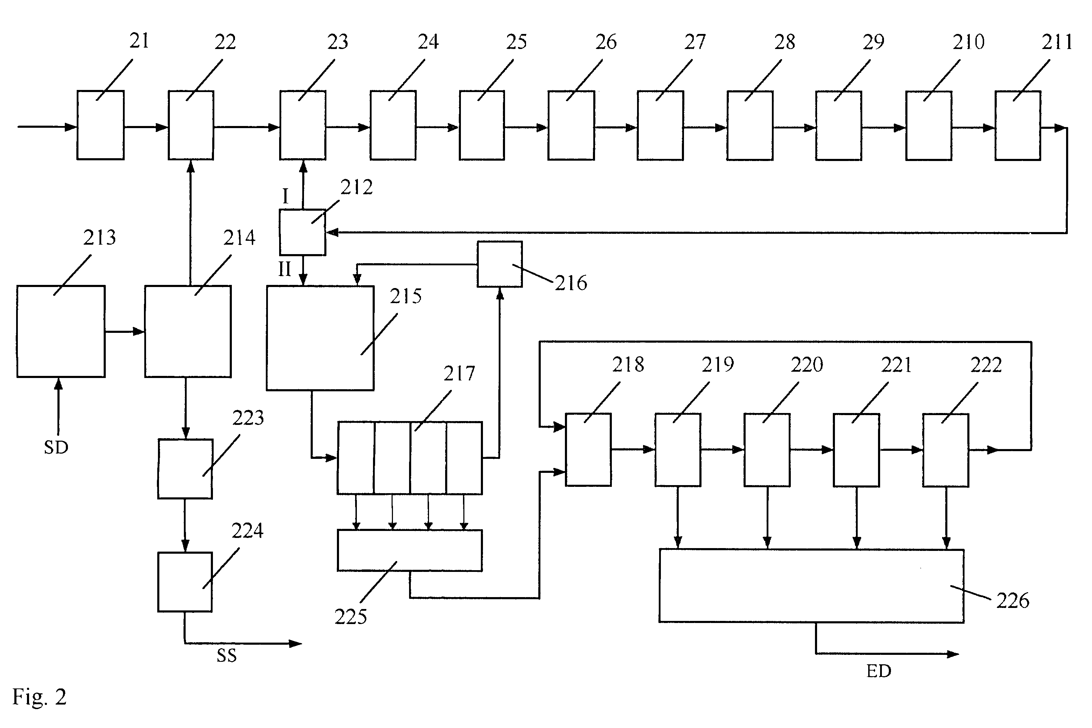

Eine weitere Funktionseinheit innerhalb des Symbolverarbeitungssystems **8**, das im nächsten Abschnitt anhand von Fig. 2 detailliert beschrieben wird, führt die Sendesignalaufbereitung durch, wobei ein zu sendender digitaler Datenstrom, der von einer Datenquelle in das Mikrocontrollersystem gelangt, so aufbereitet wird, daß einem Digital-Analogwandler **12** unmittelbar die Abtastwerte der zu sendenden Signalformen zugeführt werden. Das digital/analog gewandelte Sendesignal wird in einem Rekonstruktionstiefpaß **11** gefiltert und nach Verstärkung in einer Sendeendstufe **10** über den Sendekoppler **9** dem Stromnetz 1 zugeführt Die Funktionsblöcke **13** und **14** dienen der Synchronisation der Datenübertragung mit der Netzwechselspannung. Dabei wird im Funktionsblock **13** eine hochpräzise Netznulldurchgangsdetektion durchgeführt, und gleichzeitig erfolgt die galvanische Trennung der Netznulldurchgangsinformation vom Stromnetz mit Hilfe eines Optokopplers. In Block **14** ist eine digitale Phasenregelschleife (PLL $\equiv$ Phase Locked Loop) realisiert, mit deren Hilfe hochfrequenter Jitter jeglicher Art von der Netznulldurchgangsinformation entfernt wird, so daß schließlich einem Interrupt-Eingang des Mikrocontrollersystems **15** ein steilflankiges und stabiles Synchronisationssignal zugeführt wird. Die Synchronisation mit der Netzwechselspannung ist keine generelle Optimallösung; deshalb wird weiter unten eine vorteilhafte Ausgestaltung der Erfindung beschrieben, die eine korrelative Synchronisation realisiert und so auch ohne die Netzwechselspannung perfekte Synchronisation erreicht.

Das in Fig. 2 dargestellte Blockschaltbild zeigt ein integriertes Mikrorechnersystem, das die Funktionsblöcke **7, 8, 12** und 15 aus Fig. 1 einschließt. Bei der realen Ausführung eines kompletten symbolverarbeitenden Mehrträgersystems ist es vorteilhaft, alle Funktionseinheiten aus Fig. 1 mit Ausnahme der Koppler **2, 9** und des Sendeverstärkers **10** monolithisch in Form eines Mixed-Signal-ASICs zu integrieren. An dieser Stelle wird nur der in Fig. 2 gezeigte Ausschnitt betrachtet, weil er zur Erläuterung der wesentlichen erfindungsgemäßen Funktionen besser geeignet ist, als eine umfangreiche und damit relativ unübersichtliche Gesamtschaltung.

In Fig. 2 gelangt ein vom Stromnetz getrenntes, gefiltertes und verstärktes Empfangssignal zunächst auf einen Analog-Digitalwandler **21**. Da - wie weiter oben erläutert - an elektrischen Verteilnetzen inkohärenter Empfang die Regel ist, sind für N=4 acht parallel arbeitende Korrelatoren im Empfänger nötig. Wegen des inkohärenten Empfangs werden pro Abtastwert des Empfangssignals acht Referenzwerte benötigt. Bei 600kHz Abtastrate sind maximal 125 Abtastwerte pro Frequenz nötig, so daß für die Ausgabe der Referenzsignalabtastwerte ein Speicher für 2000 Abtastwerte bei einer Taktfrequenz $f_m$=4,8MHz erforderlich ist.

Das digitalisierte Empfangssignal wird im folgenden mit $\mathbf{E}(iT_a)$ bezeichnet. Dabei ist $iT_a$ die diskrete Zeit, mit i=0,1,2... Jeder der digitalisierten Abtastwerte $\mathbf{E}(iT_a)$ des Empfangssignals wird in einem digitalen Multiplizierer **22** mit acht Referenzsignalabtastwerten $\mathbf{R}(iT_a+\nu T_a/8)$, mit $\nu$=0...7, aus einem Signalform- oder Abtastwertspeicher **214** multipliziert. Die acht Teilprodukte werden anschließend über die Signalformdauer $T_c$ (Chipdauer) integriert, d.h. digital in separaten Akkumulatoren aufsummiert. Diese Akkumulatoren sind nach Fig. 2 folgendermaßen vorteilhaft realisiert:

Ein Addierer **23** ist mit acht auf ihn folgenden Registern **24.....29, 210, 211** und einem Schalter **212** zu einer Ringstruktur zusammenschaltbar. Zu Beginn des Empfangs einer Signalform ist der Schalter **212** für die Dauer von acht Takten der Frequenz $f_m$ in Position II, d.h. die Ringstruktur ist aufgetrennt, so daß Nullen an den einen Eingang des Addierers **23** gelangen, während der andere Eingang nacheinander acht Multiplikationsergebnisse $\mathbf{E}(iT_a)\cdot\mathbf{R}(iT_a+\nu T_a/8)$ mit $\nu=0...7$ vom Multiplizierer **22** erhält. Dabei gilt folgende Zuordnung:

$\mathbf{R}(iT_a+0\cdot T_a/8) \equiv$ Sinusabtastwert $f_1$-Chip (Inphasekomponente für $f_1$-Chip),
$\mathbf{R}(iT_a+1\cdot T_a/8) \equiv$ Sinusabtastwert $f_2$-Chip (Inphasekomponente für $f_2$-Chip),
$\mathbf{R}(iT_a+2\cdot T_a/8) \equiv$ Sinusabtastwert $f_3$-Chip (Inphasekomponente für $f_3$-Chip),
$\mathbf{R}(iT_a+3\cdot T_a/8) \equiv$ Sinusabtastwert $f_4$-Chip (Inphasekomponente für $f_4$-Chip),
$\mathbf{R}(iT_a+4\cdot T_a/8) \equiv$ Cosinusabtastwert $f_1$-Chip (Quadraturkomponente für $f_1$-Chip),
$\mathbf{R}(iT_a+5\cdot T_a/8) \equiv$ Cosinusabtastwert $f_2$-Chip (Quadraturkomponente für $f_2$-Chip),
$\mathbf{R}(iT_a+6\cdot T_a/8) \equiv$ Cosinusabtastwert $f_3$-Chip (Quadraturkomponente für $f_3$-Chip),
$\mathbf{R}(iT_a+7\cdot T_a/8) \equiv$ Cosinusabtastwert $f_4$-Chip (Quadraturkomponente für $f_4$-Chip),

Nach Ablauf von acht Takten der Frequenz $f_m$ stehen in den Registern **24...29, 210, 211** folgende Ergebnisse:

| Register → | | | | | | | |
|---|---|---|---|---|---|---|---|
| 24 | 25 | 26 | 27 | 28 | 29 | 210 | 211 |
| $\mathbf{Q_4}$ | $\mathbf{Q_3}$ | $\mathbf{Q_2}$ | $\mathbf{Q_1}$ | $\mathbf{I_4}$ | $\mathbf{I_3}$ | $\mathbf{I_2}$ | $\mathbf{I_1}$ |

Dabei ist $\mathbf{I}_j$ die Inphase- und $\mathbf{Q}_j$ die Quadraturkomponente des Chips mit der Frequenz $\mathbf{f}_j$, mit j=1...4.
Wegen i=0 gilt am Beginn einer Signalform:

$$Q_4(0) = E(0)\cdot R(0+7\cdot T_a/8) + 0,$$

$$Q_3(0) = E(0)\cdot R(0+6\cdot T_a/8) + 0,$$

$$Q_2(0) = E(0)\cdot R(0+5\cdot T_a/8) + 0,$$

$$Q_1(0) = E(0)\cdot R(0+4\cdot T_a/8) + 0,$$

$$I_4(0) = E(0)\cdot R(0+3\cdot T_a/8) + 0,$$

$$I_3(0) = E(0)\cdot R(0+2\cdot T_a/8) + 0,$$

$$I_2(0) = E(0)\cdot R(0+1\cdot T_a/8) + 0,$$

$$I_1(0) = E(0)\cdot R(0+0\cdot T_a/8) + 0.$$

Die Addition von 0 ergibt sich, weil die Ringstruktur durch den Schalter **212** aufgetrennt ist. Nach Ablauf der erwähnten acht Takte der Frequenz $f_m$ wird der Schalter **212** in Position I gebracht, so daß die beschriebene Ringstruktur entsteht, in der die Inhalte des Registers **211** nunmehr an den Addierer **23** gelangen. Jetzt werden Rechenoperationen ausgeführt, die die Inhalte der Register **24...29, 210, 211** folgendermaßen akkumulieren:

$$\text{Register 24} \quad Q_4(i) = E(iT_a) \cdot R\left(iT_a + \frac{7T_a}{8}\right) + \sum_{\xi=0}^{i-1} E(\xi T_a) \cdot R\left(\xi T_a + 7 \cdot \frac{T_a}{8}\right)$$

$$\text{Register 25:} \quad Q_3(i) = E(iT_a) \cdot R\left(iT_a + \frac{6T_a}{8}\right) + \sum_{\xi=0}^{i-1} E(\xi T_a) \cdot R\left(\xi T_a + 6 \cdot \frac{T_a}{8}\right)$$

$$\text{Register 26:} \quad Q_2(i) = E(iT_a) \cdot R\left(iT_a + \frac{5T_a}{8}\right) + \sum_{\xi=0}^{i-1} E(\xi T_a) \cdot R\left(\xi T_a + 5 \cdot \frac{T_a}{8}\right)$$

$$\text{Register 27:} \quad Q_1(i) = E(iT_a) \cdot R\left(iT_a + \frac{4T_a}{8}\right) + \sum_{\xi=0}^{i-1} E(\xi T_a) \cdot R\left(\xi T_a + 4 \cdot \frac{T_a}{8}\right)$$

$$\text{Register 28:} \quad I_4(i) = E(iT_a) \cdot R\left(iT_a + \frac{3T_a}{8}\right) + \sum_{\xi=0}^{i-1} E(\xi T_a) \cdot R\left(\xi T_a + 3 \cdot \frac{T_a}{8}\right)$$

$$\text{Register 29:} \quad I_3(i) = E(iT_a) \cdot R\left(iT_a + \frac{2T_a}{8}\right) + \sum_{\xi=0}^{i-1} E(\xi T_a) \cdot R\left(\xi T_a + 2 \cdot \frac{T_a}{8}\right)$$

$$\text{Register 210:} \quad I_2(i) = E(iT_a) \cdot R\left(iT_a + \frac{1T_a}{8}\right) + \sum_{\xi=0}^{i-1} E(\xi T_a) \cdot R\left(\xi T_a + 1 \cdot \frac{T_a}{8}\right)$$

$$\text{Register 211:} \quad I_1(i) = E(iT_a) \cdot R\left(iT_a + \frac{0 \cdot T_a}{8}\right) + \sum_{\xi=0}^{i-1} E(\xi T_a) \cdot R\left(\xi T_a + 0 \cdot \frac{T_a}{8}\right)$$

Unter der Voraussetzung, daß eine Signalform die Chipdauer $T_c = N \cdot T_a$ hat, erhält man nach i=N Takten der Frequenz $f_a$, also nach 8·N Takten der Frequenz $f_m$, die gewünschten acht Signalkomponenten in den Registern **24... 29, 210, 211** von Fig. 2:

| 24 | 25 | 26 | 27 | 28 | 29 | 210 | 211 |
|----|----|----|----|----|----|-----|-----|
| $Q_4$ | $Q_3$ | $Q_2$ | $Q_1$ | $I_4$ | $I_3$ | $I_2$ | $I_1$ |

Für die nun folgende Symbolentscheidung ist zunächst die geometrische Addition der Signalkomponenten $I_j$, $Q_j$ gemäß dem Quadraturempfängerprinzip erforderlich:

$$B_1 = \sqrt{I_1^2 + Q_1^2}; \quad B_2 = \sqrt{I_2^2 + Q_2^2}; \quad B_3 = \sqrt{I_3^2 + Q_3^2}; \quad B_4 = \sqrt{I_4^2 + Q_4^2},$$

wobei sich die Beträge $B_1...B_4$ ergeben.

Die Rechenoperationen Quadrieren und Radizieren sind mit digitaler Hardware zwar problemlos durchführbar, der Aufwand ist jedoch, insbesondere bei großem Dynamikbereich, beträchtlich. In der vorliegenden Erfindung wird deshalb vorteilhaft die folgende Näherung verwendet:

$$B_j \approx \max\{I_j, Q_j\} + \left(\frac{1}{4} + \frac{1}{8}\right) \cdot \min\{I_j, Q_j\},$$

die bei erheblich geringerem Aufwand gleichwertige Ergebnisse liefert. Dabei ist jeweils der betragsmäßig größere Korrelationswert $I_j$ oder $Q_j$ einer Signalkomponente zu dem mit (1/4+1/8) multiplizierten kleineren zu addieren. Die dazu notwendigen einfachen arithmetischen und logischen Operationen sind in einem Funktionsblock **215**, einem zweiten Schalter **216** und einem Betragsregistersatz **217** realisiert. Nach Ablauf einer Chipdauer wird der Schalter **212** für genau acht Takte in Position II gebracht, so daß die acht Korrelationswerte in den Block **215** gelangen. Die vier Ersten davon ($I_1...I_4$) werden unmittelbar in den Betragsregistersatz **217** weitergeschoben. Der Schalter **212** ist nun wieder in Position I, so daß die Korrelationswerte der nächsten Signalform in den Registern **24...29, 210, 211** auflaufen können. Nun wird zur weiteren Berechnung der Beträge $B_j$ nach obiger Rechenvorschrift der zweite Schalter **216** geschlossen, so daß die vier Werte $I_1...I_4$ nacheinander in den Funktionsblock **215** zurückgeführt werden, wobei jeder von ihnen mit dem zugehörigen, noch im Block **215** gespeicherten Quadraturwert $Q_1...Q_4$ verglichen wird. Der jeweils größere Wert wird ermittelt und in Betragsregistersatz **217** geschoben.

Die jeweils kleineren Korrelationswerte werden jetzt im Funktionsblock **215** durch Rechtsschieben um zwei bzw. drei Bitstellen durch Vier bzw. durch Acht geteilt und die Ergebnisse addiert. Für die abschließende Addition gemäß obiger Rechenvorschrift werden die im Betragsregistersatz **217** gespeicherten Maximalwerte über den zweiten Schalter **216** zum Funktionsblock **215** zwecks Addition zu den jeweils mit (1/4+1/8) skalierten Minimalwerten zurückgeführt, und die Ergebnisse werden in den Betragsregistersatz **217** geschoben. Dort stehen nun die vier gewünschten Beträge $B_j$ zur Verfügung, mit denen im weiteren die Symbolentscheidung durchgeführt werden kann.

Gemäß Tabelle 2 kann eine Symbolentscheidung jeweils nach Ablauf von vier Chipintervallen erfolgen. Dazu ist es notwendig, die Beträge $B_1...B_4$ aus dem Registersatz **217** in vier aufeinanderfolgenden Chipintervallen entsprechend dem folgenden Schema aufzuaddieren, und die Ergebnisse in den vier Symbolregistern **219...222** abzulegen.

Chipintervall **Nr.**

| 1 | 2 | 3 | 4 | | Symbolregister | Datensymbol |
|---|---|---|---|---|---|---|
| $B_1$ + | $B_2$ + | $B_3$ + | $B_4$ | $\Sigma \Rightarrow$ | 222 | 00 |
| $B_2$ + | $B_3$ + | $B_4$ + | $B_1$ | $\Sigma \Rightarrow$ | 221 | 01 |
| $B_3$ + | $B_4$ + | $B_1$ + | $B_2$ | $\Sigma \Rightarrow$ | 220 | 10 |
| $B_4$ + | $B_1$ + | $B_2$ + | $B_3$ | $\Sigma \Rightarrow$ | 219 | 11 |

Tabelle 4: Symbolwertberechnung

Die benötigten Operationen werden mit Hilfe eines Multiplexers **225** und eines Addierers **218** im Zusammenspiel mit dem Betragsregistersatz **217** und den Symbolregistern **219...222** durchgeführt. Am Ende des ersten Chipintervalls seien die Symbolregister **219...222** mit Nullen gefüllt. Der Multiplexer 225 liefert jetzt der Reihe nach die vier Beträge $B_1...B_4$ gemäß Spalte 1 der Tabelle 4 an den Addierer **218,** dessen zweiter Eingang währenddessen Nullen erhält. Nach dem zweiten Chipintervall kommen die Beträge gemäß Spalte 2 von Tabelle 4 zyklisch vertauscht aus dem Multiplexer, d.h. $B_2, B_3, B_4, B_1$, so daß wegen der Rückkopplung der Symbolregister zum Addierer **218** nach vier Additionsschritten nunmehr die Teilsummen entsprechend den ersten beiden Spalten von Tabelle 4 in den Symbolregistern enthalten sind. Die Fortsetzung der dargestellten Überlegungen liefert nach Ablauf der beiden restlichen Chipintervalle die Symbolergebnisse in den Registern **219...222**. In einem Entscheider **226** muß nun lediglich das Maximum der vier Resultate ermittelt werden, um die zugehörige Datenbitkombination zu bestimmen, die dann als Empfangsdaten ED an die Datensenke geliefert werden kann. Aus den Resultaten der Symbolberechnung läßt sich jedoch noch mehr Information gewinnen, die vorteilhaft für eine weitere Ausgestaltung der Erfindung genutzt werden kann, nämlich zur autonomen von der Netzwechselspannung unabhängigen korrelativen Synchronisation, die im nächsten Abschnitt detailliert beschrieben wird. Vorher sind noch die restlichen Blöcke aus Fig. 2 zu erläutern, die die wesentlichen Sendefunktionen beinhalten.

Kernstück der Sendehardware ist der Signalformspeicher **214**, der die Abtastwerte der Sendesignalformen enthält, die zu einem großen Teil auch im Empfangsbetrieb vorteilhaft als Referenzsignalabtastwerte benutzt werden können. Die zu sendenden Daten, die Sendedaten SD, gelangen zunächst in einen Funktionsblock **213** wo sie entsprechend der Symbolbildung gemäß Tabelle 2 zu Frequenzfolgen kombiniert werden. In der nach Tabelle 2 vorgegebenen Reihenfolge werden jetzt vom Funktionsblock **213** nacheinander diejenigen Adreßbereiche des Signalformspeichers **214** angesprochen und ausgelesen, in denen die zu den gewünschten Frequenzen gehörigen Abtastwerte abgelegt sind. Bei einer Abtasttaktfrequenz von 600kHz hätten die Adreßbereiche jeweils eine Länge von maximal 125. Insgesamt wären dann höchstens 500 Abtastwerte abzuspeichern. Um den Aufwand für den auf einen Digital-Analogwandler **223** folgenden Rekonstruktionstiefpaß **224** gering zu halten, ist es vorteilhaft, die Taktfrequenz bei der Synthese des Sendesignals SS z.B. auf 1,2MHz oder 2,4MHz zu erhöhen. Der erforderliche Speicher wächst dabei proportional. Ein weiteres wichtiges Detail bei der Ausgestaltung der Sendeseite ist, daß es sowohl beim Frequenz-wechsel innerhalb eines Symbols als auch an den Symbolgrenzen zu keinerlei abrupten Phasenänderungen kommt, d.h. daß Phasenkontinuität gewährleistet ist. Die strengen Vorschriften bezüglich der Außerbandstörleistung nach EN 50 065-1 wären anderenfalls nicht einzuhalten.

Nach der Beschreibung eines Ausführungsbeispiels wird nun im abschließenden Teil der Darstellung der Erfindung eine spezielle Art der autonomen Synchronisation vorgestellt, die durch die besondere Ausgestaltung der Empfängerarchitektur als Nebenprodukt möglich wird.

In vielen Fällen ist es vorteilhaft, wenn auf die Netzwechselspannung als Synchronisationsreferenz verzichtet werden kann. In einigen Ländern Osteuropas, wo die Stabilität der Netzfrequenz erheblich schlechter ist als im europäischen Verbundnetz, kann eine hinreichend präzise Synchronisation für Chipraten von ca. $1000s^{-1}$ nicht mehr erreicht werden. Oder aber, wenn eine funktionierende Kommunikation auch bei Stromausfall gefordert wird, muß eine autonome Empfängersynchronisation aus dem empfangenen Signal heraus erfolgen können. Generell ist es vorteilhaft, eine Grobsynchronisation stets mit Hilfe der Netzwechselspannung durchzuführen und dann auf Basis des im folgenden vorgestellten korrelativen Verfahrens ständig Synchronisationsfehler auszugleichen, so daß im Endeffekt eine so genaue Synchronisation erreicht wird, wie sie allein auf Basis der Netzwechselspannung auch im europäischen Verbundnetz nicht möglich wäre, selbst dann nicht, wenn die Synchronisationsreferenz z.B. mit Hilfe einer digitalen Phasenregelschleife weitgehend von Jitter befreit werden kann.

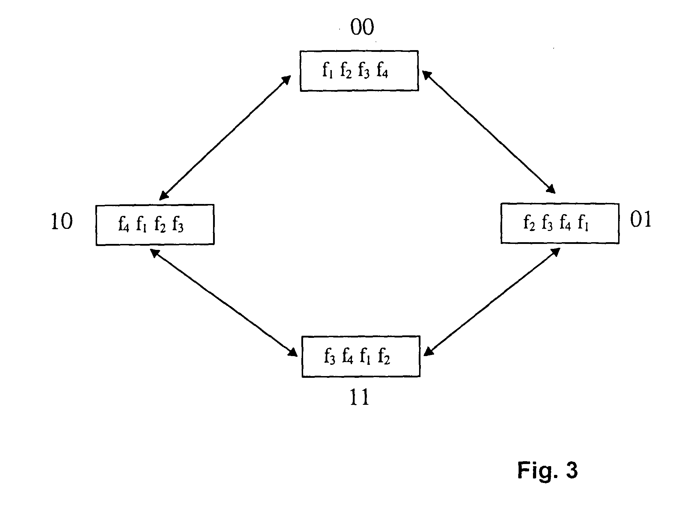

In bekannten korrelativen Empfängern erfordert eine autonome Synchronisation aus dem Empfangssignal in der Regel mehr Aufwand, als die Durchführung der Korrelation selbst. Bei der Erfindung hingegen läßt sich diese Synchronisation ohne nennenswerten Zusatzaufwand mit der ohnehin notwendigen Empfängerhardware bewerkstelligen. Weil in allen Sendern und Empfängern grundsätzlich Schwingquarze zur Takterzeugung verwendet werden, steht von vornherein eine hinreichend stabile Zeitbasis zur Verfügung. Aufgabe der Synchronisationseinrichtung ist es dann letztlich, das im Empfangssignal vorhandene Zeitraster mit dem lokal im Empfänger erzeugten exakt zur Übereinstimmung zu bringen. Dieser komplexe Vorgang wird nun anhand der Fig. 3, die sich auf Tabelle 2 stützt, und anhand von Tabelle 5 erklärt.

In Fig. 3 sind die vier informationstragenden Symbole und die zugehörigen Datenbitkombinationen dargestellt. Ausgehend von der Bitkombination '00' erkennt man, daß das zu '10' gehörige Symbol durch zyklisches Rechtsschieben und das zu '01' gehörende durch Linksschieben entsteht. Bezüglich der Synchronisation bedeutet Rechtsschieben, daß das Zeitraster der lokalen Referenz im Empfänger gegenüber dem empfangenen Signal voreilt, d.h. zur Korrektur müßte eine Verzögerung durchgeführt werden. Analoges gilt für den Vorgang Linksschieben.

Hätte man '01' als Ausgangspunkt gewählt, ergäbe sich bei zyklischem Rechtsschieben '00' und bei Linksschieben '11'. Stellt man für jedes Symbol die beschriebene Betrachtung an, wird klar, daß man allein durch Betrachtung des größten und des zweitgrößten Korrelationswertes ermitteln kann, ob ein Vor- oder Nacheilen des empfängerseitigen Zeitrasters vorliegt. Die Differenz der Beträge liefert zudem einen Anhaltspunkt über die Größe des Synchronisationsfehlers, d.h. je größer sie ist, um so genauer stimmt die Synchronisation, und um so weniger sollte dann korrigierend eingegriffen werden. Die Korrektur der Synchronisation ist nach obigen Betrachtungen einfach durchzuführen (Ausgangspunkt sei der Empfang des zu '00' gehörenden Symbols): Hat man z.B. Voreilen mit relativ großer Differenz zwischen größtem ('00') und zweitgrößtem Korrelationswert ('10') erkannt, dann wird die lokale Referenz im Empfänger etwas verzögert, was digital sehr einfach durch Einfügen zusätzlicher Taktschritte möglich ist. Nach dem folgenden Korrelationsvorgang werden wieder größter und zweitgrößter Korrelationswert untersucht. Jetzt sei das zur Bitkombination '11' gehörige Symbol gesendet worden; deshalb wird für dieses Symbol der größte Korrelationswert empfangen. Nach der vorangegangenen Korrektur der Voreilung wird jetzt erwartet, daß der zweitgrößte Korrelationswert für '01' auftritt, und daß die Differenz zum größten sich erhöht hat, d.h. die Synchronisation ist besser geworden. Die beschriebenen Korrekturschritte werden, gegebenenfalls unter stetiger Verkleinerung, solange fortgesetzt, bis statt Voreilen ein Nacheilen der empfängerseitigen Referenz erkannt wird. Ein stabiler Optimalzustand ist erreicht, wenn bei großer Differenz zwischen größtem und zweitgrößtem Korrelationswert nach jedem Korrelationsvorgang, d.h. jeweils nach Ablauf einer Symboldauer abwechselnd Voreilen und Nacheilen der empfängerseitigen Referenz detektiert wird. Dieser Idealzustand wird in der Praxis sicher selten vorkommen, da aufgrund stets vorhandener Störsignale die zu untersuchende Differenz auch bei idealer Synchronisation Schwankungen unterworfen ist, die sich von Synchronisationsfehlern nicht unterscheiden lassen. Das bedeutet, daß für das Erreichen des beschriebenen stabilen Zustandes in der Regel größere Korrekturen ( mehr Verschiebungsschritte) anfallen werden, als man theoretisch erwarten würde.

Die folgende Tabelle 5 verdeutlicht die beschriebenen Zusammenhänge bezüglich der Zeitraster, wobei die Sendung des zur Bitkombination '00' gehörenden Symbols angenommen ist - siehe obere Zeile (gesendet).

| gesendet | | $f_1$ | $f_1$ | $f_2$ | $f_2$ | $f_3$ | $f_3$ | $f_4$ | $f_4$ |
|---|---|---|---|---|---|---|---|---|---|
| 00 → | | $f_1$ | | $f_2$ | | $f_3$ | | $f_4$ | |
| 01 | | $f_2$ | | $f_3$ | | $f_4$ | | $f_1$ | |
| 10 → | | $f_4$ | $f_1$ | $f_1$ | $f_2$ | $f_2$ | $f_3$ | $f_3$ | $f_4$ |
| 11 | | $f_3$ | | $f_4$ | | $f_1$ | | $f_2$ | |

Voreilung

Tabelle 5: Zur Erläuterung des Prinzips der korrelativen Synchronisation

Auf der Empfängerseite ist eine erhebliche Voreilung des Referenzzeitrasters zu erkennen. Das führt zum einen dazu, daß für das gesendete Symbol ein zu geringer Korrelationswert zustande kommt, und daß sich zum anderen bei Symbolen, die nicht gesendet wurden, Beiträge ergeben. Dies ist bei dem erfindungsgemäßen Synchronisationsverfahren aber nur bei einem einzigen Symbol der Fall, nämlich bei dem, das der Bitkombination '10' zugeordnet ist. Bei den beiden übrigen Symbolen entstehen keine Korrelationsbeiträge. Die senkrecht verlaufenden gestrichelten Rechtecke in Tabelle 5 umfassen für jedes der vier Chips eines Symbols die durch den Zeitrasterversatz an falscher Stelle aufkorrelierten Beiträge. Man erkennt, daß nur im zu '10' gehörigen Symbol Beiträge auftreten können - bei den übrigen '01' und '11' gibt es keine Übereinstimmung der Frequenzen.

**Patentansprüche**

1. Mehrträgerverfahren zur Digitaldatenübertragung über elektrische Energieverteilnetze, bei dem zur Synchronisation der Signalsynthese für Senden und Empfangen und für die Synchronisation der Empfangssignalverarbeitung die Netzwechselspannung als globales Referenzsignal verwendet wird, wobei der Beginn einer Datenübertragung immer an einen Nulldurchgang der Netzspannung gekoppelt wird, und wobei zur Informationsübertragung mittels schneller phasenkontinuierlicher Frequenzänderungen und mittels Symbolverarbeitung

    a) aus einem zu sendenden Datenstrom Kombinationen von ld(N) Datenbits einer Anzahl N von Symbolen zugeordnet werden, von denen jedes Symbol sich aus derselben Anzahl N Signalformen unterschiedlicher Frequenzen zusammensetzt, und wobei die Zahl N eine Zweierpotenz, vorzugsweise N=4 ist,

    b) empfangsseitig eine Anzahl 2N parallel arbeitender digitaler signalangepaßter Filter für den gleichzeitigen inkohärenten Optimalempfang aller N jeweils für die Darstellung eines Symbols eingesetzten Signalformen verwendet wird, wobei für jede der N Signalformen ein der jeweiligen Signalformenergie entsprechender digitaler Zahlenwert als Korrelationswert gebildet wird,

    c) eine Bewertung und Skalierung der N Korrelationswerte durch Vergleich mit einer frei wählbaren Schwelle erfolgt, und

    d) die N ein Symbol bildenden Korrelationswerte zum jeweiligen Symbolwert aufsummiert werden, daraus das Symbol mit dem größten Wert ermittelt und die ihm unmittelbar zugeordnete Datenbitkombination - als Empfangsdaten ED - ausgegeben wird.

2. Verfahren nach Anspruch 1, dadurch gekennzeichnet, daß die zur Bewertung und Skalierung benutzte Schwelle als Prozentsatz des maximal möglichen Autokorrelationswertes einer Signalform gewählt und adaptiv, abhängig von empfangener Stör- und/oder Nutzsignalenergie, eingestellt wird.

3. Verfahren nach Anspruch 1 oder 2, dadurch gekennzeichnet, daß zum Zweck einer korrelativen Synchronisation jeweils außer dem größten auch der zweitgrößte Symbolwert bestimmt wird, woraus sowohl die Richtung eines Zeitfehlers der Synchronisation (d.h. Vor- oder Nacheilung), als auch die Größe dieses Fehlers ermittelt werden.

4. Verfahren nach Anspruch 3, dadurch gekennzeichnet, daß aus der Richtung und Größe eines Phasenfehlers eine Steuerinformation für eine Synchronisationseinrichtung generiert wird, die adaptiv dem ermittelten Fehler entgegenwirkt.

5. Vorrichtung in Form einer gemischt analog/digitalen integrierten Schaltung (Mixed-Signal-ASIC) zur Durchführung des Verfahrens nach einem der Ansprüche 1 bis 4, die dafür eingerichtet ist,
zur Synchronisation der Signalsynthese für Senden und Empfangen und für die Synchronisation der Empfangssignalverarbeitung die Netzwechselspannung als globales Referenzsignal zu verwenden, wobei der Beginn einer Datenübertragung immer an einen Nulldurchgang der Netzspannung gekoppelt ist, mit

a) einer Einrichtung zum Senden und zum inkohärenten parallelen Optimalempfang von N Signalformen verschiedener Frequenz, wobei die Zahl N eine Zweierpotenz ist, und wobei das aus einem Stromnetz (1) ausgekoppelte, verstärkte und gefilterte Empfangssignal nach Analog/Digitalwandlung an einen schaltungsinternen digitalen Multiplizierer (22) gelangt, dessen zweiter Eingang ein digitales Referenzsignal aus einem Abtastwertespeicher (214) erhält, wobei jedem Empfangssignalabtastwert 2N Referenzwerte entsprechend den Inphase- und Quadraturabtastwerten der N eingesetzten Signalformen zugeordnet sind, dadurch gekennzeichnet, daß

b) eine Ringstruktur aus einem Addierer (23), einem Satz von 2N Registern (24 bis 29, 210, 21 1) und einem Schalter (212) vorhanden ist, die dafür eingerichtet ist, die im Multiplizierer (22) entstehenden Produkte zu akkumulieren, so daß nach Ablauf einer Signalformdauer in den 2N Registern die Inphasekomponenten und die Quadraturkomponenten der N für ein Symbol eingesetzten Signalformen akkumuliert sind,

c) die Schaltung unter Verwendung des Schalters (212) außerdem dafür eingerichtet ist, unter Auftrennung der Ringstruktur aus Addierer und Registersatz, die 2N Ergebnisse aus den Registern einer geometrischen Additionsschaltung zuzuführen, die dafür eingerichtet ist, mittels einer Näherung einen dem Betrag der jeweiligen Signalformenergie entsprechenden digitalen Zahlenwert zu bilden,

d) eine weitere Ringstruktur aus einem Addierer (218), einem Satz von N Registern (219 bis 222) und ein Multiplexer (225) vorhanden sind, die dafür eingerichtet ist, die Symbolwerte zu akkumulieren, so daß nach Ablauf einer Symboldauer in den N Registern die jeweiligen Symbolwerte vorliegen, die einer Auswerte- und Entscheidungseinrichtung (226) zugeführt sind, die dafür eingerichtet ist, das Symbol mit dem größten Wert zu ermitteln, und die ihm unmittelbar zugeordneten Datenbitkombinaton- als Empfangsdaten ED- auszugeben, und

e) eine integrierte Takterzeugungs- und Steuereinheit (8) vorhanden ist, die dafür eingerichtet ist, neben der Synthese der Referenzsignale im Empfangsfall, beim Senden den Abtastwertespeicher (214) so zu adressieren, daß seine Ausgangssignale phasenkontinuierliche Sendesignalformen bilden, die nach Analog/Digitalwandlung, Tiefpaßfilterung und Verstärkung ins Stromnetz (1) einkoppelbar sind.

6. Vorrichtung nach Anspruch 5, dadurch gekennzeichnet, daß

a) für Aufgaben der Systemsteuerung, der Signalauswertung und des Datentransfers ein Mikrocontrollersystem (15), oder ein Mikroprozessor oder eine Digitalschaltung vorhanden ist, die monolithisch integrierter Bestandteil des Mixed-Signal-ASICs ist, und

b) mittels des Mikrocontrollersystems (15), oder des Mikroprozessors oder der Digitalschaltung beim Sendevorgang der Sendeeinrichtung die zu sendende Datenbitkombination zuführbar ist, wobei in der Sendeeinrichtung zuvor eine verwendete Datenrate und die Zahl N der Signalformen verschiedener Frequenz pro Symbol durch Programmieren des Mikrocontrollersystems (15), oder des Mikroprozessors oder der Digitalschaltung auf dem Mixed-Signal-ASIC eingestellt ist.

7. Vorrichtung nach Anspruch 5 oder 6, dadurch gekennzeichnet, daß zur Unterdrückung von Jitter bei der Nulldurchgangsdetektion eine digitale Phasenregelschleife, bestehend aus einem der Phasendetektion dienenden digitalen Korrelator und einem nichtlinearen digitalen Regler, eingesetzt ist, so daß ein stabiles, von Kurzzeitschwankungen befreites Synchronisationssignal zur Verfügung steht.

**Claims**

1. Multicarrier method for transmitting digital data via electrical power distribution systems, in which method, for synchronization of the signal synthesis for transmitting and receiving and for the synchronization of the received-signal processing, the mains AC is used as a global reference signal, wherein, the beginning of a data transmission is always coupled to a zero transmission of the mains voltage and wherein, for the purpose of transmitting information by means of fast continuous-phase frequency changes and by means of symbol processing,

   a) from a data stream to be transmitted, combinations of ld(N) data bits are allocated to a number N of symbols, each symbol of which is composed of the same number N of signal forms of different frequencies, the number N being a power of two, preferably N = 4,

   b) at the receiving end, a number 2N of digital matched filters operating in parallel is used for the simultaneous incoherent optimum reception of all N signal forms in each case used for the representation of a symbol, a digital numerical value corresponding to the respective signal form energy being formed as correlation value for each of the N signal forms,

   c) weighting and scaling of the N correlation values is performed by comparison with a freely selectable threshold, and

   d) the N correlation values forming a symbol are added together to form the respective symbol value the symbol with the largest value is determined from this and the data bit combination assigned directly to it is output as received data ED.

2. Method according to Claim 1, characterized in that the threshold used for weighting and scaling is selected as a percentage of the maximum possible autocorrelation value of a signal form and is adaptively set in dependence on received interference and/or useful signal energy.

3. Method according to Claim 1 or 2, characterized in that, for the purpose of correlative synchronization, in each case in addition to the largest, the second-largest symbol value is determined from which both the direction of a timing error of the synchronization (i.e. lead or lag) and the magnitude of this error are determined.

4. Method according to Claim 3, characterized in that, from the direction and magnitude of a phase error, a control information item for a synchronization device is generated which adaptively counteracts the error determined.

5. Device in the form of a mixed analog/digital integrated circuit (mixed signal ASIC) for carrying out the method according to one of Claims 1 to 4, which is set up to use the mains AC as a global reference signal for the synchronization of the signal synthesis for transmitting and receiving and for the synchronization of the received-signal processing, the beginning of a data transmission always being coupled to a zero transmission of the mains voltage, having

   a) a device for transmitting and for the incoherent parallel optimum reception of N signal forms of different frequency, wherein the number N is a power of two, and wherein the amplified and filtered received signal coupled out of a power system (1), after analog/digital conversion, passes through a digital multiplier (22) inside the circuit, the second input of which receives a digital reference signal from a sample memory (214), wherein 2N reference values corresponding to the in-phase and quadrature samples of the N signal forms used are allocated to each received-signal sample,
   characterized in that

b) a ring structure of an adder (23), a set of 2N registers (24 to 29, 210, 211) and a switch (212) exists which is set up to accumulate the products produced in the multiplier (22) so that, after a signal form period has elapsed, the in-phase components and the quadrature components of N signal forms used for a symbol are accumulated in the 2N registers,

c) the circuit is also set up using the switch (212) to supply the 2N results from the registers, with opening of the ring structure of adder and set of registers, to a geometric addition circuit which is set up to form a digital numerical value corresponding to the absolute value of the respective signal form energy by means of an approximation,

d) a further ring structure of an adder (218), a set of N registers (219 to 222) and a multiplexer (225) exists which is set up to accumulate symbol values so that, after a symbol period has elapsed, the respective symbol values which are supplied to an analysis and decision device (226), which is set up to determine the symbol with the largest value and to output the data bit combination assigned directly to it - as received data ED - are present in the N registers, and

e) an integrated clock generation and control unit (8) exists which is set up, apart from the synthesis of the reference signals in the case of reception, to address the sample memory (214) during transmission in such a manner that its output signals form continuous-phase transmit signal forms which, after analog/digital conversion, low-pass filtering and amplification, can be coupled into the power system (1).

6. Device according to Claim 5, characterized in that

a) for tasks of system control, signal analysis and data transfer, a microcontroller system (15), or a microprocessor or a digital circuit exists which is a monolithically integrated component of the mixed-signal ASIC, and

b) by means of the microcontroller system (15), or the microprocessor or the digital circuit, during the transmitting process, the data bit combination to be transmited can be supplied to the transmitting device, wherein, in the transmitting device, a used data rate and the number N of signal forms of different frequency per symbol are first set by programming the microcontroller system (15), or the microprocessor or the digital circuit in the mixed-signal ASIC.

7. Device according to Claim 5 or 6, characterized in that for suppressing jitter during the zero transition detection, a digital phase-locked loop consisting of a digital correlator used for phase detection and a non-linear digital regulator is used so that a stable synchronization signal freed of short-term fluctuations is available.

**Revendications**

1. Procédé multiporteuse pour la transmission de données numériques sur des réseaux de distribution d'énergie électrique, selon lequel pour la synchronisation de la synthèse de signal pour l'émission et la réception et pour la synchronisation du traitement du signal de réception, on utilise la tension alternative du réseau comme signal de référence global, selon lequel le début d'une transmission de données est toujours lié à un passage par zéro de la tension du réseau et, pour la transmission d'informations par des changements de fréquence rapides sans changement de phase et par un traitement de symboles

a) on associe dans un flux de données à transmettre des combinaisons de ld(N) bits de données à un nombre N de symboles, parmi lesquels chaque symbole est formé du même nombre N de formes de signal avec des fréquences différentes, le nombre N étant une puissance de 2, de préférence N=4,

b) on utilise côté réception, un nombre 2N de filtres numériques adaptés au signal, travaillant en parallèle, pour la réception optimale incohérente simultanée des N formes de signal qui sont utilisées chaque fois pour la représentation d'un symbole, une valeur numérique codée numérique correspondant à l'énergie de forme de signal concernée étant calculée comme valeur de corrélation pour chacune des N formes de signal,

c) on procède à un calcul et un classement des N valeurs de corrélation par comparaison avec un seuil choisi arbitrairement et

d) on additionne les N valeurs de corrélation formant un symbole pour former la valeur de symbole, puis on détermine le symbole ayant la plus forte valeur et on délivre la combinaison de données qui lui est directement associée - en tant que données de réception ED -.

**2.** Procédé selon la revendication 1, caractérisé en ce que l'on choisit le seuil utilisé pour le calcul et le classement en tant que pourcentage de la valeur d'auto-corrélation maximale possible d'une forme de signal et on la règle de manière adpatative, en fonction de l'énergie reçue de signal parasite et/ou de signal utile.

**3.** Procédé selon la revendication 1 ou 2, caractérisé en ce que pour réaliser une synchronisation corrélative, on détermine chaque fois outre la plus grande valeur de symbole, la valeur de symbole venant immédiatement après, et on calcule à partir de celle-ci la direction d'une erreur de temps de la synchronisation (c'est-à-dire avance ou retard) ainsi que la valeur de cette erreur.

**4.** Procédé selon la revendication 3, caractérisé en ce qu'on génère à partir de la direction et de la valeur d'une erreur de phase une information de commande pour un dispositif de synchronisation qui agit de manière adaptative à l'encontre de l'erreur calculée.

**5.** Dispositif sous la forme d'un circuit intégré mixte analogique/numérique (Mixed-Signal-ASIC) pour la mise en oeuvre du procédé selon une des revendications 1 à 4, agencé de telle sorte que pour la synchronisation de la synthèse de signal pour l'émission et la réception et pour la synchronisation du traitement du signal de réception, on utilise la tension alternative du réseau comme signal de référence global, le début d'une transmission de données étant toujours lié à un passage par zéro de la tension du réseau, comportant

a) un dispositif pour l'émission et pour la réception optimale incohérente, parallèle, de N formes de signal avec des fréquences différentes, le nombre N étant une puissance de 2, et le signal de réception prélevé sur un réseau de distribution de courant (1), amplifié et filtré, arrivant après conversion analogique/numérique à un multiplicateur numérique (22) intégré au circuit, dont la deuxième entrée reçoit un signal de référence numérique en provenance d'une mémoire de valeurs de balayage (214), à chaque valeur de balayage de signal de réception étant associées 2N valeurs de référence selon les valeurs de balayage en phase et en quadrature des N formes de signal utilisées,
caractérisé
b) en ce qu'il est prévu une structure en anneau comprenant un additionneur (23), un système de 2N registres (24 à 29, 210, 211) et un commutateur (212), qui est agencée de manière à additionner les produits délivrés par le multiplicateur (22) de telle sorte qu'après une durée de forme de signal, on obtienne dans les 2N registres la somme des composantes en phase et des composantes en quadrature des N formes de signal utilisées pour un symbole,
c) en ce que le circuit avec le commutateur (212) est en outre agencé de manière à envoyer, moyennant une rupture de la structure en anneau de l'additionneur et du système de registre, les 2N résultats des registres à un circuit additionneur géométrique qui est prévu pour former pour une approximation une valeur numérique codée numérique correspondant à la valeur de l'énergie de forme de signal concernée
d) en ce qu'il est prévu une structure en anneau supplémentaire, comprenant un additionneur (218), un système de Nregistres (219 à 222) et un multiplexeur (225), qui est agencée pour additionner les valeurs de symbole de manière à obtenir dans les N registres, après une durée de symbole, les valeurs de symbole qui sont transmises à un dispositif de traitement et de décision (226) agencé de manière à déterminer le symbole ayant la plus grande valeur et à éditer la combinaison de bits de données directement associée - sous forme de données de réception -.
e) en ce qu'il est prévu une unité intégrée de génération de rythme et de commande (8) qui, outre la synthèse des signaux de référence dans le cas de la réception, effectue l'adressage de la mémoire de valeurs de balayage (214) lors de l'émission, de telle sorte que les signaux de sortie de celle-ci délivrent des formes de signal d'émission sans changement de phase qui, après conversion anlogique/numérique, filtrage passe-bas et amplification, peuvent être injectées sur le réseau d'énergie électrique.

**6.** Dispositif selon la revendication 5, caractérisé

a) en ce qu'il est prévu pour les tâches de commande du système, de traitement de signal et de transfert de données, un système micro-contrôleur (15) ou un microprocesseur ou un circuit numérique qui est un élément intégré monolithique du circuit "Mixed-Signal-ASIC et
b) en ce que, au moyen du système micro-contrôleur (15) ou du microprocesseur ou du circuit numérique, lors de l'émission la combinaison de données peut être envoyée au dispositif émetteur, un débit de données utilisé et le nombre N des formes de signal de fréquence différente par symbole pouvant être réglés par programmation du système micro-contrôleur (15) ou du microprocesseur ou du circuit numérique sur le circuit "Mixed-Signal-ASIC.

7. Dispositif selon la revendication 5 ou 6, caractérisé en ce que pour éliminer les instabilités lors de la détection du passage par zéro on utilise une boucle de régulation de phase numérique avec un corrélateur numérique servant à la détection de phase et un régulateur numérique non linéaire, de manière à disposer d'un signal de synchronisation stable libéré des fluctuations de courte durée.

Fig. 1

Fig. 2

EP 0 924 911 B1

00

$f_1$ $f_2$ $f_3$ $f_4$

10   $f_4$ $f_1$ $f_2$ $f_3$                    $f_2$ $f_3$ $f_4$ $f_1$   01

$f_3$ $f_4$ $f_1$ $f_2$

11

**Fig. 3**